Europäisches Patentamt

European Patent Office

Office européen des brevets

(11) Veröffentlichungsnummer: **0 235 681 B1**

# EUROPÄISCHE PATENTSCHRIFT

(45) Veröffentlichungstag der Patentschrift: **03.07.91**

(51) Int. Cl.5: **C09J 4/00**

(21) Anmeldenummer: 87102336.2

(22) Anmeldetag: 19.02.87

(54) **Verbesserter Klebestift.**

(30) Priorität: 27.02.86 DE 3606382

(43) Veröffentlichungstag der Anmeldung:
09.09.87 Patentblatt 87/37

(45) Bekanntmachung des Hinweises auf die
Patenterteilung:
03.07.91 Patentblatt 91/27

(84) Benannte Vertragsstaaten:
AT BE CH DE ES FR GB IT LI LU NL SE

(56) Entgegenhaltungen:
FR-A- 2 323 750
US-A- 4 073 756

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Gierenz, Gerhard, Dr.
Dieselstrasse 80
W-5650 Solingen(DE)**
Erfinder: **Kraus, Gabriella
Ulmenallee 140
W-4040 Neuss 21(DE)**

## Beschreibung

Stiftförmige starre Klebstoffe, die in einer verschließbaren Hülle verschiebbar gelagert sind und beim Abreiben auf eine Empfängerfläche einen klebrigen Film hinterlassen, sind heute Gebrauchsgegenstände des täglichen Lebens. Sie enthalten insbesondere -siehe hierzu DE-PS 18 11 466 wasserlösliche bzw. wasserdispergierbare synthetische Hochpolymere mit Klebstoffcharakter - insbesondere Polyvinylpyrrolidon (PVP) - gelöst in einer wäßrig-organischen Flüssigphase zusammen mit einer formgebenden Gerüstsubstanz. Als Gerüstsubstanz werden insbesondere Alkali- bzw. Ammoniumsalze aliphatischer Carbonsäuren, insbesondere des C-Zahlbereichs von etwa 12 bis 22, verwendet. Werden die an sich hochklebrigen wäßrigen Aufbereitungen der Polymersubstanzen mit Klebstoffcharakter zusammen mit geringen Mengen der Gerüstsubstanz auf Basis von Fettsäureseifen auf höhere Temperaturen, insbesondere oberhalb 80° C erwärmt und läßt man dann diese Lösung in Ruhestellung abkühlen, so erstarrt das Stoffgemisch zu einem mehr oder weniger steifen Seifengel, in dem die formgebende und vergleichsweise starre Micellstruktur solcher Seifengele zunächst überwiegend in Erscheinung tritt. Das ermöglicht die bekannte Ausbildung und Handhabung solcher Massen in Stiftform in verschließbaren Hülsen. Beim Abreiben wird die Micellstruktur zerstört und damit die starre Masse in den pastösen Zustand umgewandelt, in dem dann der Klebstoffcharakter des Stoffgemisches in den Vordergrund tritt.

Es sind zahlreiche Versuche unternommen worden, Klebestifte dieser Art durch Veränderung der formgebenden Gerüstsubstanz und/oder durch Veränderung der mit Lösungsmittel aktivierten klebstoffbildenden Komponente zu verändern. Die DE-AS 22 04 482 verwendet als formgebende Gerüstsubstanz das Reaktionsprodukt von Sorbit und Benzaldehyd. Nach der Lehre der DE-OS 26 20 721 sollen Salze von substituierten Terephthalsäureamiden als Geliermittel verwendet werden. Gemäß DE-OS 20 54 503 sollen anstelle der Alkalimetallsalze von aliphatischen Carbonsäuren freie langkettige aliphatische Säuren oder deren Ester die Gerüstsubstanz darstellen. Die DE-OS 22 19 697 will solche Klebestifte dadurch verbessern, daß anionische nichtseifige Netzmittel dem Stift einverleibt werden, insbesondere um dessen Abrieb auf der Unterlage zu verbessern. Gemäß der DE-OS 24 19 067 soll als gelbildendes Mittel ein Reaktionsprodukt aus aromatischen Diisocyanaten mit Mono- und/oder Dialkanolaminen Verwendung finden.

Trotz aller dieser Vorschläge wird bis zum heutigen Tage wenigstens in weitaus überwiegendem Umfang die älteste Form der hier betroffenen Klebestifte auf Basis von Seifengelen eingesetzt, wie sie in der eingangs zitierten DE-PS 18 11 466 beschrieben sind. Eine Lösung von PVP in einem wäßrig-organischen Lösungsmittelgemisch wird durch Einarbeitung von Alkaliseifen aliphatischer Carbonsäuren in die Form des weich abreibbaren Klebestifts umgewandelt.

Die Erfindung geht von der Aufgabe aus, Stifte dieser Art in wichtigen Eigenschaften zu verbessern. Das Abreiben des Stiftes auf dem Empfängerblatt soll geschmeidiger als bisher möglich werden, um damit beispielsweise den Auftrag auf dünnem Papier zu erleichtern. Die ausgebildete Klebstoffschicht soll gegenüber den bisherigen vergleichbaren Handelsprodukten einen längeren offenen Zeitraum der Klebrigkeit besitzen, die sich selbst dann noch bemerkbar macht, wenn vorbekannte Stifte längst jede Klebrigkeit in der aufgestrichenen Klebstofffläche verloren haben. Auch sollen die neuen Klebestifte für einen verlängerten Zeitraum die Korrektur der Lage der zu verklebenden Flächen ermöglichen. Trotz dieser Eigenschaftsverbesserungen für die Verarbeitbarkeit und die Anwendbarkeit des Klebstoffes soll die Festigkeit des Klebestiftes und damit die Handhabbarkeit der relativ starren Seifengele nicht negativ beeinflußt werden.

Die Lösung der erfindungsgemäßen Aufgabe geht von der überraschenden Feststellung aus, daß bei der Einarbeitung geringer -aber nicht unbeträchtlicher - Mengen einer bestimmten Klasse von Zusatzstoffen das angestrebte Ergebnis der Haftklebrigkeit für einen längeren Zeitraum, verbunden mit besonders geschmeidiger weicher Abreibbarkeit, erzielt werden kann, ohne daß hierdurch die Stabilität der Seifengelstiftsubstanz leidet.

Gegenstand der Erfindung ist dementsprechend ein weich abreibbarer Klebestift auf Basis einer mit erstarrtem Seifengel verdickten Lösung von filmbildenden wasserlöslichen bzw. wasserdispergierbaren synthetischen Polymersubstanzen mit Klebstoffcharakter in einem wäßrig-organischen Lösungsmittelgemisch, wobei das Kennzeichen der Weiterentwicklung darin liegt, daß die Stiftmasse zusätzlich eine begrenzte Menge an Lactamen niederer Aminocarbonsäuren und/oder die entsprechenden ringgeöffneten Aminocarbonsäuren enthält.

Geeignete Aminocarbonsäuren bzw. deren Lactame sollten bis zu 12 C-Atome, insbesondere 4 - 8 C-Atome enthalten. Der für die praktische Anwendung erfindungsgemäß herausragende Vertreter dieser Stoffklasse ist ε-Caprolactam bzw. die sich daraus ableitende ε-Aminocapronsäure.

Die Menge der erfindungsgemäß mitverwendeten Lactame und/oder der entsprechenden Aminocarbonsäuren beträgt üblicherweise nicht mehr als 15 Gew.-%, beispielsweise 2,5 - 15 Gew.-% - jeweils bezogen auf die Gesamtstiftmasse. In der bevorzugten Ausführungsform werden 3 - 10 Gew.-% dieser Lactame bzw. Aminocarbonsäuren mitverwendet. Im Falle des Caprolactams und/oder der Aminocapronsäure ist der Bereich von 4 - 9 Gew.-% -jeweils wieder bezogen auf das Gesamtgewicht des Stiftes -besonders bevorzugt.

Seifengelstifte der angegebenen bekannten Art weisen bekanntlich einen pH-Wert im schwach alkalischen Bereich auf, der bis etwa 11,5 reichen kann. Bei Mitverwendung von Aminocarbonsäuren der erfindungsgemäßen Art werden diese Säuren - sofern sie im ringgeöffneten Zustand Verwendung finden - wenigstens anteilsweise als entsprechende Alkalisalze vorliegen. Es hat sich dabei allerdings gezeigt, daß durch die Mitverwendung von Lactamen und/oder den entsprechenden ringgeöffneten Aminocarbonsäuren eine gewisse Pufferwirkung im Sinne der pH-Wertsverschiebung in den etwas schwächer alkalisch wirkenden Bereich auftreten kann. Stiftmassen der erfindungsgemäßen Art zeigen in der Regel einen pH-Wert im Bereich von 9,5 - 11,5 und insbesondere im Bereich von 10,0 - 11,0.

In einer besonders bevorzugten Ausführungform der Erfindung werden dabei Gemische von Lactam und zugehöriger ringgeöffneter Aminocarbonsäure gemeinsam in der Stiftmasse verwendet. Die Verhältnisse dieser beiden Komponenten zueinander liegen zweckmäßigerweise im Bereich von 20 - 90 Gew.-% Lactam auf 80 - 10 Gew.-% der ringgeöffneten Säure und insbesondere im Bereich von 45 - 75 Gewichtsteile Lactam auf 55 - 25 Gewichtsteile der ringgeöffneten Säure.

Bei der Herstellung der erfindungsgemäßen verbesserten Stifte kann durch das Alkaliangebot im Rahmen der Seifenbildung Einfluß auf das gewünschte Verteilungsverhältnis von Lactam zu ringgeöffneter Aminocarbonsäure genommen werden, wobei im Ansatz das Caprolactam eingesetzt und dann diese cyclische Verbindung im Rahmen des Herstellungsverfahrens über die wäßrig organische, Alkalihydroxid, insbesondere Natriumhydroxid enthaltende Flüssigphase partiell zu der entsprechenden ringgeöffneten Aminocarbonsäure verseift wird.

Die übrigen Bestandteile des neuen Seifengelstiftes entsprechen den bisher eingesetzten Komponenten. Der weitaus bevorzugte wasserlösliche Kleber ist Polyvinylpyrrolidon mit einem K-Wert von etwa 70 - 90. Andere geeignete hochmolekulare synthetische Polymersubstanzen, die über die Lösungsmittelphase zum Aktivkleber umgewandelt werden können, sind literaturbekannt. Genannt seien beispielsweise Polyvinylalkohol, Polyacryl- und/oder Methacrylsäuren, Polyacrylamide bzw. ihre Mischpolymerisate, Polyvinylmethylether, Styrolbutadien-Copolymere, Butadienacrylnitril-Copolymere und dergleichen.

In einer weiteren bevorzugten Ausführungsform der Erfindung wird PVP als lösungsmittelaktivierter Kleber in den Stift eingearbeitet, wobei vergleichsweise geringe Mengen des PVP Verwendung finden, die an der Untergrenze des bisher üblichen Bereichs liegen. In dieser bevorzugten Ausführungsform enthält die Stiftmasse nicht mehr als 28 Gew.-%, vorzugsweise nicht mehr als 25 Gew.-% PVP.

Zusammen damit wird eine wäßrig-organische Flüssigphase eingesetzt, die neben Wasser praktisch nichtflüchtige bis schwerflüchtige organische wasserlösliche Lösungsmittel enthält. Günstig ist die Verwendung von Polyglykolethern, wobei die bevorzugten Polyethylenglykolether ein durchschnittliches Molekulargewicht im Bereich von 400 bis 1 000, insbesondere im Bereich von 500 bis 800 aufweisen sollten. Weiterhin geeignet sind als wassermischbare Lösungsmittel polyfunktionelle Alkohole wie Glycerin, Trimethylolpropan und dergleichen und/oder Polyetherglykole, insbesondere Polyethylenglykole. Als besonders zweckmäßig hat sich die Verwendung eines Gemisches aus Glycerin und Polyethylenglykol erwiesen.

Die wäßrig-organischen Flüssigphasen sollten überwiegend Wasser enthalten und vergleichweise untergeordnete Mengen der organischen wassermischbaren bzw. -löslichen Lösungsmittel. Auf 100 Gewichtsteile Wasser sollten 10 bis 50 Gewichtsteile der praktisch nichtflüchtigen bzw. schwerflüchtigen Lösungsmittel entfallen.

Als gelbildende Gerüstsubstanz werden in an sich bekannter Weise die Natriumsalze von natürlichen und/oder synthetischen Fettsäuren eingesetzt. Geeignet sind insbesondere Fettsäuren des C-Zahlbereichs von 10 bis 22, insbesondere 12 bis 18.

Neben den hier geschilderten Hauptkomponenten können übliche Hilfsmittel mitverwendet werden, beispielsweise Substanzen, die den leichten und weichen Abrieb weiterhin fördern - beispielsweise Sorbit - oder Pigmente, Farbstoffe, Geruchsverbesserer und dergleichen.

Die gerüststoffbildenden Natriumseifen werden in an sich bekannten Mengen von 3 bis 10, vorzugsweise 5 bis 8 Gew.-% eingesetzt, die mitverwendeten organischen wasserlöslichen Hilfskomponenten, insbesondere Glycerin und Polyethylenglykol werden bevorzugt in Mengen von 6 bis 20 Gew.-% verwendet, die sonstigen Hilfsstoffe machen wie üblich untergeordnete Mengen aus.

Die Verarbeitung der Mischung erfolgt in an sich bekannter Weise aus den auf Temperaturen über 80 °C, vorzugsweise über 85 °C erwärmten wäßrig-organischen Mischungen bzw. Lösungen, die zu Stiftform vergossen werden - zweckmäßigerweise unmittelbar in die für die Applikation benutzten verschließbaren Hüllen. Hier ist ein weiterer wichtiger Vorteil für die erfindungsgemäße Ausgestaltung dieser Seifengelstifte festzustellen: Die Viskosität der Schmelze in der neuen Formulierung ist bei Vergießtemperatur -beispielsweise bei 60 °C - wesentlich geringer als bei Seifengelstiften der bisher bekannten Art. Schmelzen der neuen Wirkstoffmischung besitzen beispielsweise bei 60 °C nur noch eine Viskosität von 15 Pa·s, während früher entsprechende Schmelzen Viskositäten im Bereich von 90 bis 100 Pa·s besaßen. Diese Veränderung führt zu beträchtlichen Vereinfachungen beim blasenfreien Abfüllen der geschmolzenen Stiftmasse in die verschließbaren Hüllen. Durch die Lehre der Erfindung werden damit nicht nur anwendungstechnische Vorteile für den fertigen Stift erzielt, auch die Herstellung der Stifte wird beträchtlich erleichtert.

Es ist besonders überraschend, daß durch den erfindungsgemäßen Zusatz nicht nur die offene Zeit, innerhalb derer noch fest abbindende Klebungen bewirkt werden, erheblich verlängert wurde, sondern daß auch die Formstabilität unverändert gut bleibt. Außerdem kann eine Einsparung an Klebekomponente (PVP) bei gleich guter Klebfestigkeit erreicht werden.

Beispiele

Beispiel 1

In einem mit Rührer und Rückflußkühler sowie Heizmöglichkeit ausgestatteten 250 ml-fassenden Rundkolben wurden 71 g Wasser, 7,5 g Glycerin und 6,0 g Polyethylenglykol (Mol-Gew.600) sowie 15,0 g einer 70 %igen Sorbitlösung vorgelegt und 8,7 g Myristinsäure eingetragen. Anschließend wurden unter Rühren 3,3 g 50 %ige Natronlauge zugefügt und auf 75 °C erwärmt. Nachdem sich eine klare Lösung gebildet hatte, wurden 31,5 g Polyvinylpyrrolidon (K-Wert 80) vermischt mit 6,6 g Caprolactam unter Rühren eingestreut und die Temperatur auf 95 °C erhöht. Nach vollständigem Lösen des Polyvinylpyrrolidons (etwa 2 Stunden) wurde die Masse in die bekannten Hülsen für Klebestifte mit einem Durchmesser von 16 mm abgefüllt und erkalten gelassen.

Beispiel 2

In gleicher Weise wie vorstehend beschrieben wurden Klebestifte hergestellt, wobei zusammen mit dem Polyvinylpyrrolidon 10 g Caprolactam eingetragen wurde, aber nur 67 g Wasser verwendet wurden.
Nach dem Erkalten auf Zimmertemperatur wurden in beiden Fällen formstabile Stifte erhalten.

Testung der Proben

Diese wurde bei Raumtemperatur bei 23,5 °C und einer relativen Luftfeuchtigkeit zwischen 35 und 37 % durchgeführt.
Die Untersuchung der Klebung wurde an einseitig gestrichenem Chrompapier (100 g/m²) durchgeführt, das zuvor bei dem erwähnten Klima wenigstens 2 Tage gelagert war. Hierzu wurden 5 cm breite, 30 cm lange Streifen geschnitten und auf die ungestrichene Seite des Papieres Klebstoff des Klebestiftes aufgetragen. Dazu wurde der Stift 10mal unter normalem Handandruck über das Papier gezogen. Alle Proben wurden von 3 Personen unabhängig voneinander durchgeführt.

Vor dem Aufdrücken der mit Klebstoff versehenen Seite der Teststreifen auf eine Unterlage aus gleichem Chrompapier (ungestrichene Seite) ließ man das mit Klebstoff versehene Papier unter den oben erwähnten Klimabedingungen 30 oder 60 oder 90 Sekunden offenliegen. Anschließend wurde dann unter Handandruck (leichtes Anreiben) die Klebung durchgeführt, und zwar so, daß die ungestrichenen Papierseiten in Klebekontakt kamen.

Nach einer Lagerzeit von 10 Minuten wurden die Teststreifen in einem Winkel von etwa 140 ° von der Unterlage von Hand abgezogen. Dabei ergab sich folgendes Resultat. Bei einer Ablüftezeit von 30 bzw. 60 Sekunden war in allen Fällen eine vollflächige Verklebung eingetreten, die am Papierausriß zu erkennen war. Das gleiche gilt für das Ablüften von 90 Sekunden gemäß der Zusammensetzung gemäß Beispiel 2. Lediglich beim 90 Sekunden langen Ablüften bei der Probe gemäß Beispiel 1 war nicht an allen Stellen eine einwandfreie Verklebung eingetreten.

Vergleichsversuch

Es wurde eine Probe gemäß Beispiel 1 angefertigt, wobei jedoch kein Caprolactam zugesetzt wurde. Klebestift nach dieser Zusammensetzung wurden der gleichen Testung unterworfen. In keinem Falle konnte nach 30 Sekunden Ablüften noch eine Klebung erreicht werden.

**Ansprüche**
Patentsprüche für folgende Vertragsstaaten : BE, CH, DE, FR, GB, IT, LI, LU, NL, SE

1. Weich abreibbarer Klebestift auf Basis einer mit erstarrtem Seifengel verdickten Lösung von wasserlöslichen bzw. wasserdispergierbaren synthetischen Polymersubstanzen mit Klebstoffcharakter in einem wäßrig-organischen Lösungsmittelgemisch dadurch gekennzeichnet, daß die Stiftmasse zusätzlich eine begrenzte Menge an Lactamen niederer Aminocarbonsäuren und/oder die entsprechenden ringgeöffneten Aminocarbonsäuren enthält.

2. Klebestift nach Anspruch 1, dadurch gekennzeichnet, daß Aminocarbonsäuren und/oder deren Lactame mit bis zu 12 C-Atomen, insbesondere mit 4 - 8 C-Atomen vorliegen.

3. Klebestift nach Ansprüchen 1 und 2, dadurch gekennzeichnet, daß die Stiftmasse $\epsilon$-Caprolactam und/oder $\epsilon$-Aminocapronsäure bzw. ihr Alkalisalz enthält.

4. Klebestift nach Ansprüchen 1 bis 3, dadurch gekennzeichnet, daß die Aminocarbonsäuren und/oder ihre Lactame in Mengen von 2,5 - 15 Gew.-% vorzugsweise von 3 - 10 Gew.-% - bezogen auf die gesamte Stiftmasse - vorliegen.

5. Klebestift nach Ansprüchen 1 bis 4, dadurch gekennzeichnet, daß ein Gemisch von Lactam und zugehöriger ringgeöffneter Aminocarbonsäure im Bereich von 20 - 90 Gewichtsteilen Lactam auf 80 - 10 Gewichtsteile der Aminocarbonsäure, insbesondere im Bereich von 45 - 75 Gewichtsteilen Lactam auf 55 - 25 Gewichtsteile der ringgeöffneten Aminocarbonsäure im Stift vorliegt.

6. Klebestift nach Ansprüchen 1 bis 5, dadurch gekennzeichnet, daß der pH-Wert der Stiftmasse im schwach-alkalischen Bereich und insbesondere im Bereich von 9,5 - 11,5 liegt.

7. Klebestift nach Ansprüchen 1 bis 6, dadurch gekennzeichnet, daß als die Gelstruktur bildende Seifen Natriumsalze von $C_{12}$ - $C_{18}$- Fettsäuren natürlichen und/oder synthetischen Ursprungs.

8. Klebestift nach Ansprüchen 1 bis 7, dadurch gekennzeichnet, daß als mit der Lösungsmittelphase aktivierter Kleber Polyvinylpyrrolidon (PVP) vorliegt, wobei das PVP insbesondere K-Werte im Bereich von 70 - 90 aufweist.

9. Klebestift nach Ansprüchen 1 bis 8, dadurch gekennzeichnet, daß der Stift als Flüssigphase ein Gemisch von Wasser mit praktisch nichtflüchtigen bis schwerflüchtigen wasserlöslichen organischen Lösungsmitteln enthält, wobei Mischungsverhältnisse von 10 - 50 Gewichtsteilen der organischen Lösungsmittelphase auf 100 Gewichtsteile bevorzugt sind.

10. Klebestift nach Ansprüchen 1 bis 9, dadurch gekennzeichnet, daß als organische Lösungsmittel Polyglykolether und Glycerin eingesetzt wird, wobei als Polyglykolether bevorzugt ein Polyethylenglykol eines durchschnittlichen Molekulargewichts von 400 - 1000 Verwendung findet.

11. Klebestift nach Ansprüchen 1 bis 10, dadurch gekennzeichnet, daß die Stiftmasse nicht mehr als 28 Gew.-% und vorzugsweise nicht mehr als 25 Gew.-% PVP enthält.

Patentsprüche für folgende Vertragsstaaten : Spanien und Österreich

1. Verfahren zur Herstellung weich abreibbarer Klebestifte auf Basis einer mit erstarrtem Seifengel verdickten Lösung von wasserlöslichen bzw. wasserdispergierbaren synthetischen Polymersubstanzen mit Klebstoffcharakter in einem wäßrig-organischen Lösungsmittelgemisch, indem man die Polymersubstanz, die Seife und das wäßrig-organische Lösungsmittelgemisch mischt, anschließend in verschließbare Hüllen abfüllt und schließlich zu einer festen Masse erstarren läßt, dadurch gekennzeichnet, daß man als weitere Mischungskomponente eine begrenzte Menge an Lactamen niederer Aminocarbonssäuren und/oder die entsprechenden ringgeöffneten Aminocarbonsäuren bzw. deren Alkalisalze zusetzt.

2. Verfahren nach Anspruch 1, dadurch gekennzeichnet, daß die Lactame bzw. die Aminocarbonsäuren bis zu 12 C-Atome, insbesondere 4 bis 8 C-Atome haben.

3. Verfahren nach Anspruch 1 oder 2, dadurch gekennzeichnet, daß die Lactame bzw. die Aminocarbonsäuren in Mengen von 2,5 bis 15 Gew.-%, vorzugsweise von 3 bis 10 Gew.-% - bezogen auf die gesamte Stiftmasse - zugesetzt werden.

4. Verfahren nach Anspruch 1, 2 oder 3, dadurch gekennzeichnet, daß die Mischungskomponenten in solchen Mengen eingesetzt werden, daß die Stiftmasse im schwach-alkalischen Bereich und insbesondere im Bereich von 9,5 bis 11,5 liegt.

5. Verfahren nach mindestens einem der Ansprüche 1 bis 4, dadurch gekennzeichnet, daß die Seife ein Natriumsalz von $C_{12}$-$C_{18}$-Fettsäuren natürlichen und/oder synthetischen Ursprungs ist.

6. Verfahren nach mindestens einem der Ansprüche 1 bis 5, dadurch gekennzeichnet, daß die Polymersubstanz mit Klebstoffcharakter ein Polyvinylpyrrolidon ist, das insbesondere einen K-Wert im Bereich von 70 bis 90 aufweist.

7. Verfahren nach mindestens einem der Ansprüche 1 bis 6, dadurch gekennzeichnet, daß der Stiftmasse nicht mehr als 28 Gew.-% Polyvinylpyrrolidon zugesetzt werden, insbesondere nicht mehr als 25 Gew.-% - bezogen auf die Gesamtmasse.

8. Verfahren nach mindestens einem der Ansprüche 1 bis 7, dadurch gekennzeichnet, daß die Mischung bei Temperaturen von über 80 ° C verarbeitet wird, insbesondere über 85 ° C.

**Claims**
Claims for the following Contracting States : BE, CH, DE, FR, GB, IT, LI, LU, NL, SE

1. A soft-rubbing adhesive stick based on a solution thickened with solidified soap gel of water-soluble or water-dispersible synthetic polymers of adhesive character in an aqueous organic solvent mixture, characterized in that the stick composition additionally contains a limited quantity of lactams of lower aminocarboxylic acids and/or the corresponding ring-opened aminocarboxylic acids.

2. An adhesive stick as claimed in claim 1, characterized in that it contains aminocarboxylic acids and/or lactams thereof containing up to 12 carbon atoms and more especially from 4 to 8 carbon atoms.

3. An adhesive stick as claimed in claims 1 and 2, characterized in that the stick composition contains $\epsilon$-caprolactam and/or $\epsilon$-aminocaproic acid or an alkali salt thereof.

4. An adhesive stick as claimed in claims 1 to 3, characterized in that the aminocarboxylic acids and/or their lactams are present in quantities of from 2.5 to 15% by weight and preferably in quantities of from 3 to 10% by weight, based on the stick composition as a whole.

5. An adhesive stick as claimed in claims 1 to 4, characterized in that it contains a mixture of lactam and associated ring-opened aminocarboxylic acid in a ratio of 20-90 parts by weight lactam to 80-10 parts by weight of the aminocarboxylic acid and more especially in a ratio of 45-75 parts by weight lactam to 55-25 parts by weight of the ring-opened aminocarboxylic acid.

6. An adhesive stick as claimed in claims 1 to 5, characterized in that the pH value of the stick composition is in the mildly alkaline range and more particularly in the range from 9.5 to 11.5.

7. An adhesive stick as claimed in claims 1 to 6, characterized in that it contains sodium salts of $C_{12}$-$C_{18}$ fatty acids of natural and/or synthetic origin as the gel-forming soaps.

8. An adhesive stick as claimed in claims 1 to 7, characterized in that it contains polyvinyl pyrrolidone (PVP) as solvent-activated adhesive, the PVP having K-values of in particular from 70 to 90.

9. An adhesive stick as claimed in claims 1 to 8, characterized in that the stick contains as liquid phase a mixture of water with substantially non-volatile or low-volatility water-soluble organic solvents, mixing ratios of 10-50 parts by weight of the organic solvent phase to 100 parts by weight being preferred.

10. An adhesive stick as claimed in claims 1 to 9 characterized in that polyglycol ether and glycerol are used as organic solvents, the polyglycol ether preferably being a polyethylene glycol having an average molecular weight of from 400 to 1,000.

11. An adhesive stick as claimed in claims 1 to 10, characterized in that the stick composition contains no more than 28% by weight and preferably no more than 25% by weight PVP.

Claims for the following Contracting States : ES, AT

1. A process for the production of soft-rubbing adhesive sticks based on a solution thickened with solidified soap gel of water-soluble or water-dispersible synthetic polymers of adhesive character in an aqueous organic solvent mixture, in which the polymer, the soap and the aqueous-organic solvent mixture are mixed, the resulting mixture is subsequently packed in closable tubes and, finally, is left to harden into a solid mass, characterized in that a limited quantity of lactams of lower aminocarboxylic acids and/or the corresponding ring-opened aminocarboxylic acids or salts thereof is added as a further component of the mixture.

2. A process as claimed in claim 1, characterized in that the lactams or the aminocarboxylic acids contain up to 12 carbon atoms and more particularly from 4 to 8 carbon atoms.

3. A process as claimed in claim 1 or 2, characterized in that the lactams or the aminocarboxylic acids are added in quantities of 2.5 to 15% by weight and preferably in quantities of 3 to 10% by weight, based on the stick composition as a whole.

4. A process as claimed in claim 1, 2 or 3, characterized in that the components of the mixture are used in such quantities that the stick composition is in the mildly alkaline range and more particularly in the range from 9.5 to 11.5.

5. A process as claimed in at least one of claims 1 to 4, characterized in that the soap is a sodium salt of $C_{12}$-$C_{18}$ fatty acids of natural and/or synthetic origin.

6. A process as claimed in at least one of claims 1 to 5, characterized in that the polymer of adhesive character is a polyvinyl pyrrolidone which, in particular, has a K-value in the range from 70 to 90.

7. A process as claimed in at least one of claims 1 to 6, characterized in that no more than 28% by weight polyvinyl pyrrolidone and, in particular, no more than 25% by weight, based on the composition as a whole, is added to the stick composition.

8. A process as claimed in at least one of claims 1 to 7, characterized in that the mixture is processed at temperatures above 80°C and, more particularly, at temperatures above 85°C.

## Revendications

Revendications pour les Etats contractants suivants : BE, CH, DE, FR, GB, IT, LI, LU, NL, SE

1. Bâton adhésif apte à l'usure par frottement mou, à base d'une solution, épaissie avec un gel de savon solidifié, de substances polymères synthétiques, solubles ou dispersables dans l'eau, à caractère d'adhésif, dans un mélange de solvants aqueux-organique, caractérisé en ce que la matière du bâton contient en outre une quantité limitée de lactames d'acides aminocarboxyliques et/ou des acides aminocarboxyliques correspondant à cycles ouverts.

2. Bâton adhésif selon la revendication 1, caractérisé en ce que sont présents des acides aminocarboxyliques et/ou leurs lactames, ayant jusqu'à 12 atomes de carbone, en particulier ayant de 4 à 8 atomes de carbone.

3. Bâton adhésif selon la revendication 1 ou 2, caractérisé en ce que la matière de bâton contient de l'ε-caprolactame et/ou de l'acide ε-aminocaproïque ou un sel alcalin de celui-ci.

4. Bâton adhésif selon l'une quelconque des revendications 1 à 3, caractérisé en ce que les acides aminocarboxyliques et/ou leurs lactames sont présents en quantités de 2,5 à 15 % en poids, de préférence de 3 à 10 % en poids par rapport à la matière totale de bâton.

5. Bâton adhésif selon l'une quelconque des revendications 1 à 4, caractérisé en ce que dans le bâton est présent un mélange de lactame et d'acide aminocarboxylique correspondant à cycle ouvert, dans la plage de 20 à 90 parties en poids pour 80 à 10 parties en poids de l'acide aminocarboxylique, en particulier dans la plage de 45 à 75 parties en poids de lactame pour 55-25 parties en poids de l'acide aminocarboxylique à cycle ouvert.

6. Bâton adhésif selon l'une quelconque des revendications 1 à 5, caractérisé en ce que le pH de la matière de bâton se situe dans le domaine faiblement alcaline, et en particulier dans l'intervalle de 9,5 à 11,5.

7. Bâton adhésif selon l'une quelconque des revendications 1 à 6, caractérisé en ce que, en tant que savons constituant la structure de gel, sont présents des sels sodiques d'acides gras en $C_{12}$-$C_{18}$ d'origine naturelle et/ou synthétique.

8. Bâton adhésif selon l'une quelconque des revendications 1 à 7, caractérisé en ce que, en tant qu'adhésif activé par la phase de solvant, est présente de la polyvinylpyrrolidone (PVP), la PVP présentant en particulier des indices K dans la plage de 70 à 90.

9. Bâton adhésif selon l'une quelconque des revendications 1 à 8, caractérisé en ce que le bâton contient en tant que phase liquide un mélange d'eau avec des solvants organiques solubles dans l'eau pratiquement non volatils à peu volatils, en proportions de mélange allant de 10 à 50 parties en poids de la phase de solvant organique pour 100 parties en poids étant préférées.

10. Bâton adhésif selon l'une quelconque des revendications 1 à 9, caractérisé en ce que l'on utilise en tant que solvants organiques un éther de polyglycol et le glycérol, en utilisant en tant qu'éther de polyglycol de préférence un polyé- thylèneglycol ayant une masse moléculaire moyenne de 400 à 1000.

**11.** Bâton adhésif selon l'une quelconque des revendications 1 à 10, caractérisé en ce que la matière de bâton ne contient pas plus de 28 % en poids, et de préférence pas plus de 25 % en poids de PVP.

Revendications pour les Etats contractants suivants : AT, ES

**1.** Procédé pour la fabrication de bâtons adhésifs aptes à l'usure par frottement mou, à base d'une solution, épaissie avec un gel de savon durci, dans un mélange de solvants aqueux-organique, de substances polymères synthétiques à caractère d'adhésif, soluble dans l'eau ou dispersables dans l'eau, dans lequel on mélange la substance polymère, le savon et le mélange de solvants aqueux-organique, on introduit ensuite ce mélange dans des gaines aptes à être fermées, et enfin on le laisse durcir en une matière solide, caractérisé en ce que l'on ajoute en tant qu'autre composant de mélange une quantité limitée de lactames d'acides aminocarboxyliques inférieurs et/ou des acides aminocarboxyliques correspondants à cycles ouverts, ou de leurs sels alcalins.

**2.** Procédé selon la revendication 1, caractérisé en ce que les lactames ou les acides aminocarboxyliques ont jusqu'à 12 atomes de carbone, en particulier de 4 à 8 atomes de carbone.

**3.** procédé selon la revendication 1 ou 2, caractérisé en ce que les lactames ou les acides aminocarboxyliques sont ajoutés en quantités de 2,5 à 15 % en poids, de préférence de 3 à 10 % en poids, par rapport à la matière totale de bâton.

**4.** Procédé selon l'une quelconque des revendications 1 à 3, caractérisé en ce que les composants de mélange sont utilisés en quantités telles que la matière de bâton se situe dans le domaine faiblement alcalin, et en particulier dans l'intervalle de pH 9,5 à 11,5.

**5.** Procédé selon au moins l'une quelconque des revendications 1 à 4, caractérisé en ce que le savon est un sel sodique d'acides gras en $C_{17}$-$C_{18}$ d'origine naturelle et/ou synthétique.

**6.** Procédé selon au moins l'une quelconque des revendications 1 à 5, caractérisé en ce que la substance polymère à caractère adhésif est une polyvinylpyrrolidone qui présente en particulier un indice K dans la plage de 70 à 90.

**7.** Procédé selon au moins l'une quelconque des revendications 1 à 6, caractérisé en ce que l'on ajoute à la matière de bâton au maximum 28 % en poids de polyvinylpyrrolidone, en particulier au maximum 25 % en poids, par rapport à la matière de bâton.

**8.** procédé salon au moins l'une quelconque des revendications 1 à 7, caractérisé en ce que le mélange est transformé à des températures de plus de 80°C, en particulier de plus de 85°C.